Europäisches Patentamt

European Patent Office

Office européen des brevets

(11) Veröffentlichungsnummer : **0 079 501**
**B1**

(12) **EUROPÄISCHE PATENTSCHRIFT**

(45) Veröffentlichungstag der Patentschrift :
30.07.86

(51) Int. Cl.⁴ : **C 08 F 8/28**, C 08 J 9/30

(21) Anmeldenummer : **82109954.6**

(22) Anmeldetag : **28.10.82**

(54) Offenporiger Formkörper auf Basis von Polyvinylacetalen und Verfahren zu seiner Herstellung.

(30) Priorität : **31.10.81 DE 3143272**

(43) Veröffentlichungstag der Anmeldung :
**25.05.83 Patentblatt 83/21**

(45) Bekanntmachung des Hinweises auf die Patenterteilung : **30.07.86 Patentblatt 86/31**

(84) Benannte Vertragsstaaten :
**BE DE FR GB NL**

(56) Entgegenhaltungen :
**EP-A- 0 031 040**
**DE-A- 2 931 035**
**DE-B- 1 117 304**

(73) Patentinhaber : **HOECHST AKTIENGESELLSCHAFT**
**Postfach 80 03 20**
**D-6230 Frankfurt am Main 80 (DE)**

(72) Erfinder : **Pospich, Günther**
**Albert-Blank-Strasse 6**
**D-6230 Frankfurt am Main 80 (DE)**
Erfinder : **Zimmermann, Wolfgang, Dr.**
**Im Stückes 48**
**D-6233 Kelkheim (Taunus) (DE)**

**Beschreibung**

Die Erfindung bezieht sich auf einen offenporigen Formkörper auf Basis von Polyvinylacetalen und ein Verfahren zu seiner Herstellung durch Acetalisieren von Vinylpolymeren in einem sauren wäßrigen Medium in Gegenwart eines Netzmittels.

Die Herstellung von Schwammaterial mit offenen Poren durch Umsetzung von Polyvinylalkohol mit Formaldehyd in wäßrigem Medium ist seit langem bekannt (vgl. US-Patentschrift 2 609 347). Die Reaktion erfolgt zwischen 20 und 60 °C in Gegenwart eines sauren Katalysators, z. B. Schwefelsäure, wobei Gasblasen im Reaktionsgemisch dispergiert vorliegen. Diese Gasblasen werden erzeugt, indem Luft in die Reaktionsmasse geschlagen wird. Durch zusätzlichen Einsatz von Netzmitteln sollen sich Blasen in einheitlicher Größe bilden ; ferner soll dadurch eine bessere Verteilung der Blasen in der Masse erreicht werden. Außerdem sollen die Netzmittel den entstehenden Schaum stabilisieren. Das scheinbare spezifische Gewicht der so erhaltenen Schwämme liegt im Bereich von 0,03 bis 0,15, vorzugsweise 0,05 bis 0,06.

Aus der DE-AS 1 117 304 sind offenporige Schwammkörper bekannt, die man erhalten kann, indem man ein Mischpolymerisat aus Vinylacetat und bis zu 15 Molprozent Acroleindiäthylacetal bzw. Allylidendiacetat in saurem Medium hydrolysiert, das Verseifungsprodukt, gegebenenfalls nach Zusatz von Polyvinylalkohol, in Gegenwart eines sauren Katalysators und eines Netzmittels mit Formaldehyd vermischt, die Mischung schaumig schlägt, den Schaum in Formen gießt und den unter Ausbildung von Vernetzungsbrücken erhärteten Schwammkörper mit Wasser auswäscht.

Ferner ist bekannt, daß ein offenporiger Formkörper aus acetalisiertem Polyvinylalkohol durch Acetalisierung von Polyvinylalkohol in einem sauren wäßrigen Medium in Gegenwart eines üblichen Netzmittels und in Gegenwart einer schaumstabilisierend wirkenden Menge einer Nucleinsäure hergestellt wird (vgl. deutsche Offenlegungsschrift 29 48 508 = US-Patentschrift 4 296 210). Dabei wird als Ausgangsmaterial ein Polyvinylalkohol verwendet, der eine Esterzahl von 50 bis 270 mg KOH/g und dessen 4-gewichtsprozentige wäßrige Lösung bei einer Temperatur von 20 °C eine Viskosität von 4 bis 40 mPa · s aufweist, und die Acetalisierung wird bevorzugt mit Formaldehyd oder Paraformaldehyd durchgeführt.

Aufgabe der Erfindung ist die Schaffung eines schwammartigen, porösen Formkörpers auf der Grundlage von Polymeren mit Acetalgruppen, der offene Poren von möglichst einheitlicher Größe in möglichst homogener Verteilung aufweist und eine weiche, griffige Oberfläche zeigt.

Die Erfindung betrifft einen offenporigen Formkörper auf Basis von Polyvinylacetalen, hergestellt durch Acetalisieren von Vinylpolymeren in einem sauren wäßrigen Medium in Gegenwart eines Netzmittels, indem man aus einem Gemisch aus einer wäßrigen Polyvinylalkohol (PVAL)-Lösung, die 10 bis 50 Gew.- % PVAL enthält, wobei der PVAL eine Esterzahl von 50 bis 270 mg KOH/g und die 4 gew.- %ige wäßrige Lösung des PVAL eine Viskosität von 4 bis 50 mPa · s (gemessen bei 20 °C nach DIN 53015) aufweist, und einer wäßrigen, 40 bis 60 Gew.- % Feststoff enthaltenden Dispersion eines Vinylacetat/Ethylen-Copolymers, dessen Gehalt an Ethyleneinheiten 5 bis 60 Gew.- % beträgt, wobei die PVAL-Lösung und die Vinylacetat/Ethylen-Copolymer-Dispersion im Gewichtsverhältnis von 100 : 5 bis 100 : 150 eingesetzt werden, einen Schaum herstellt und das genannte Polymerengemisch mit einem aliphatischen $(C_1$-$C_4)$-Mono- oder -Dialdehyd umsetzt, dadurch gekennzeichnet, daß der Formkörper aus einem Gemisch aus (a) einem acetalisierten Polyvinylalkohol und (b) einem acetalisierten Vinylacetat/Ethylen-Copolymer besteht.

Vorzugsweise besteht der Formkörper aus einem Gemisch aus (a) einem formalisierten Polyvinylalkohol und (b) einem formalisierten Vinylacetat/Ethylen-Copolymer.

Die Erfindung betrifft ferner ein Verfahren zur Herstellung eines offenporigen Formkörpers auf Basis von Polyvinylacetalen durch Acetalisieren von Vinylpolymeren in einem sauren wäßrigen Medium in Gegenwart eines Netzmittels, das dadurch gekennzeichnet ist, daß man

a) aus einem Gemisch aus einer wäßrigen Polyvinylalkohol (PVAL)-Lösung, die 10 bis 50 Gew.- % PVAL enthält, wobei der PVAL eine Esterzahl von 50 bis 270 mg KOH/g und die 4 gew.- %ige wäßrige Lösung des PVAL eine Viskosität von 4 bis 50 mPa · s (gemessen bei 20 °C nach DIN 53015) aufweist, und einer wäßrigen 40 bis 60 Gew.- % Feststoff enthaltenden Dispersion eines Vinylacetat/Ethylen-Copolymers, dessen Gehalt an Ethyleneinheiten 5 bis 60 Gew.- % beträgt, wobei die PVAL-Lösung und die Vinylacetat/Ethylen-Copolymer-Dispersion im Gewichtsverhältnis von 100 : 5 bis 100 : 150 eingesetzt werden, einen Schaum herstellt und

b) das Polymerengemisch in dem Schaum mit einem aliphatischen $(C_1$-$C_4)$-Mono- oder -Dialdehyd umsetzt.

Vorzugsweise verwendet man als aliphatischen Aldehyd Formaldehyd oder eine Formaldehyd abspaltende Verbindung.

Als Ausgangsmaterial zur Herstellung des erfindungsgemäßen Formkörpers dient ein Gemisch aus einem Polyvinylalkohol und einem Vinylacetat/Ethylen-Copolymer. Der Polyvinylalkohol (PVAL) wird in Form einer wäßrigen Lösung eingesetzt, deren PVAL-Gehalt 10 bis 50, vorzugsweise 15 bis 40 Gewichtsprozent beträgt. Der Polyvinylalkohol hat eine Esterzahl von 50 bis 270, vorzugsweise 100 bis 200 mg KOH/g. Die 4gewichtsprozentige wäßrige Lösung des Polyvinylalkohols weist eine Viskosität von 4 bis 50, vorzugsweise 10 bis 26 mPa · s auf (gemessen bei einer Temperatur von 20 °C nach DIN 53015).

Die Polyvinylalkohol-Lösung wird im Gemisch mit einer wäßrigen Dispersion eines Vinylacetat/Ethylen-Copolymers eingesetzt, das Ethylen-Einheiten in einer Menge von 5 bis 60, vorzugsweise 10 bis 30 Gewichtsprozent aufweist. Der Feststoffgehalt dieser Dispersion beträgt 40 bis 60, vorzugsweise 45 bis 55 Gewichtsprozent. Die Dispersion enthält zweckmäßigerweise ein Schutzkolloid, dessen Menge 1 bis 15, vorzugsweise 2 bis 10 Gewichtsprozent (bezogen auf das Copolymer) beträgt. Geeignete Schutzkolloide sind insbesondere Polyvinylalkohol sowie auch Polyvinylpyrrolidon, Poly-N-vinylacetamid, Copolymere des N-Vinyl-N-methyl-acetamids mit Acrylsäureestern oder mit Maleinsäureestern sowie Cellulosederivate wie Hydroxyethylcellulose und Carboxymethylcellulose. Die Polyvinylalkohol-Lösung und die Vinylacetat/Ethylen-Copolymer-Dispersion werden im Gewichtsverhältnis von 100 : 5 bis 100 : 150, vorzugsweise 100 : 25 bis 100 : 100 eingesetzt.

Das erfindungsgemäße Verfahren wird in zwei Stufen durchgeführt. Zunächst stellt man aus einem Gemisch aus der Polyvinylalkohol-Lösung und der Copolymer-Dispersion in Gegenwart eines Netzmittels einen Schaum her, zweckmäßigerweise durch Einrühren von Luft bei einer Rührgeschwindigkeit von 500 bis 2 500, vorzugsweise 1 000 bis 2 000 Upm. Dabei ist es vorteilhaft, wenn das Schaumvolumen höchstens 50 Prozent des Endvolumens des fertigen Formkörpers beträgt. Als Netzmittel wird insbesondere ein anionisch wirksames Netzmittel verwendet, z. B. ein Alkalisalz, vorzugsweise ein Natriumsalz, eines Alkylsulfonats, Arylsulfonats, Alkylarylsulfonats oder eines entsprechenden Sulfats, Phosphats oder Phosphonats. Geeignete Substanzen sind beispielsweise Natriumlaurylsulfat, Natriumdodecylbenzolsulfonat und Natriumölsäuremethyltaurid.

Danach werden die Polymeren gemeinsam mit einem aliphatischen Aldehyd umgesetzt, der ein Monoaldehyd oder ein Dialdehyd mit jeweils 1 bis 4 Kohlenstoffatomen ist. Bevorzugt ist die Verwendung von Formaldehyd oder Formaldehyd abspaltenden Substanzen wie Paraformaldehyd, so daß die Acetalisierung in diesem Fall eine Formalisierung ist. Der Aldehyd wird vorzugsweise in Form einer wäßrigen Lösung mit dem in der ersten Verfahrensstufe erhaltenen Schaum vermischt. Die Acetalisierung wird in einem sauren wäßrigen Medium durchgeführt, das man durch Verwendung einer starken Mineralsäure, vorzugsweise Schwefelsäure, erhält. Die Säure wird bevorzugt in Form einer wäßrigen Lösung verwendet, deren Säuregehalt 30 bis 80, vorzugsweise 35 bis 65 Gewichtsprozent beträgt. Während der Acetalisierung wird die Temperatur des Reaktionsgemisches bei höchstens 40 °C gehalten. Nach der Zugabe des Aldehyds läßt man das Gemisch in einer geschlossenen Form bei einer Temperatur von 65 bis 100 °C, vorzugsweise 70 bis 90 °C, ruhig stehen. Die Reaktionszeit beträgt — je nach Menge des Reaktionsgemisches — 2 bis 4 Stunden. Anschließend wird der ohne Schrumpfung erhaltene poröse Formkörper mit Wasser ausgewaschen und zur Gewichtskonstanz getrocknet, vorzugsweise bei einer Temperatur von 70 bis 100 °C.

Der erfindungsgemäße Formkörper ist offenporig und zeigt eine weiche, griffige, samtartige Oberfläche. Seine Wasseraufnahmefähigkeit beträgt 1 500 bis 2 000 Gewichtsprozent. (Zum Vergleich : Naturschwamm nimmt weniger als 1 000 Gewichtsprozent Wasser auf.) Der Formkörper eignet sich als Schwamm in Industrie und Haushalt, z. B. als Autoschwamm oder Badeschwamm.

Die folgenden Beispiele erläutern die Erfindung näher. Prozentangaben beziehen sich auf das Gewicht.

Beispiel 1

In einem Becherglas werden 250 g einer 20prozentigen wäßrigen Lösung eines Polyvinylalkohols vorgelegt, der eine Esterzahl von 140 mg KOH/g und dessen 4prozentige wäßrige Lösung eine Viskosität von 18 mPa · s aufweist. Zu dieser Lösung werden unter Rühren mit einem Schnellrührer bei 500 Upm zunächst 100 g einer wäßrigen Dispersion eines Vinylacetat/Ethylen-Copolymers mit einem Ethylengehalt von 10 % und dann 70 g einer 4prozentigen wäßrigen Lösung von Natrium-Ölsäuremethyltaurid zugegeben. Die Copolymer-Dispersion hat einen Feststoffgehalt von 50 % und enthält als Schutzkolloid Polyvinylalkohol in einer Menge von 8 %. Das erhaltene Gemisch wird anschließend unter Einrühren von Luft bei einer Rührgeschwindigkeit von 2 000 Upm auf ein Volumen von 0,5 l verschäumt, und zu diesem Schaum wird ein Gemisch aus 25 g Paraformaldehyd und 90 g einer 60prozentigen Schwefelsäure zugefügt, wobei die Temperatur der Schaummasse auf etwa 35 °C gehalten wird. Sobald die Schaummasse eine cremeartige Konsistenz aufweist, wird sie in eine säurefeste Form gegossen, die dann mit einem Deckel verschlossen wird. Die Form läßt man bei einer Temperatur von 70 °C 4 Stunden lang ruhig stehen. Danach wird der entstandene Schwamm mit Wasser ausgewaschen und bei einer Temperatur von 80 °C getrocknet. Der Schwamm hat zusammenhängende Poren mit Durchmessern von 0,5 bis 1 mm, die in gleichmäßiger Verteilung vorliegen ; er ist elastisch und weich und nimmt das 12fache seines Trockengewichts an Wasser auf.

Beispiel 2

Beispiel 1 wird wiederholt mit folgenden Komponenten :
250 g Polyvinylalkohol-Lösung (entsprechend Beispiel 1),
50 g einer wäßrigen Dispersion eines Vinylacetat/Ethylen-Copolymers mit einem Ethylengehalt von 20 % (Feststoffgehalt : 50 %),

60 g    Natrium-Ölsäuremethyltaurid-Lösung (entsprechend Beispiel 1),

25 g Paraformaldehyd und

90 g 60prozentige Schwefelsäure.

Der getrocknete Schwamm hat zusammenhängende Poren mit Durchmessern von 1 bis 2 mm, die gleichmäßig verteilt sind ; er ist weich, elastisch und ausgeprägt gummiartig und nimmt das 15 fache seines Trockengewichtes an Wasser auf.

### Beispiel 3

Beispiel 1 wird wiederholt mit folgenden Komponenten :

250 g Polyvinylalkohol-Lösung (entsprechend Beispiel 1),

25 g einer wäßrigen Dispersion eines Vinylacetat/Ethylen-Copolymers mit einem Ethylengehalt von 25 % (Feststoffgehalt : 50 %),

60 g    Natrium-Ölsäuremethyltaurid-Lösung (entsprechend Beispiel 1),

20 g Paraformaldehyd und

90 g 60prozentige Schwefelsäure.

Der getrocknete Schwamm hat zusammenhängende Poren mit Durchmessern von 1 bis 5 mm, die gleichmäßig verteilt sind ; er ist weich und elastisch und nimmt das 18fache seines Trockengewichtes an Wasser auf.

### Patentansprüche

1. Offenporiger Formkörper auf Basis von Polyvinylacetalen, hergestellt durch Acetalisieren von Vinylpolymeren in einem sauren wäßrigen Medium in Gegenwart eines Netzmittels, indem man aus einem Gemisch aus einer wäßrigen Polyvinylalkohol (PVAL)-Lösung, die 10 bis 50 Gew.-% PVAL enthält, wobei der PVAL eine Esterzahl von 50 bis 270 mg KOH/g und die 4 gew.-%ige wäßrige Lösung des PVAL eine Viskosität von 4 bis 50 mPa·s (gemessen bei 20 °C nach DIN 53015) aufweist, und einer wäßrigen, 40 bis 60 Gew.-% Feststoff enthaltenden Dispersion eines Vinylacetat/Ethylen-Copolymers, dessen Gehalt an Ethyleneinheiten 5 bis 60 Gew.-% beträgt, wobei die PVAL-Lösung und die Vinylacetat/Ethylen-Copolymer-Dispersion im Gewichtsverhältnis von 100 : 5 bis 100 : 150 eingesetzt werden, einen Schaum herstellt und das genannte Polymerengemisch mit einem aliphatischen ($C_1$-$C_4$)-Mono- oder -Dialdehyd umsetzt, dadurch gekennzeichnet, daß der Formkörper aus einem Gemisch aus (a) einem acetalisierten Polyvinylalkohol und (b) einem acetalisierten Vinylacetat/Ethylen-Copolymer besteht.

2. Formkörper nach Anspruch 1, dadurch gekennzeichnet, daß er aus einem Gemisch aus (a) einem formalisierten Polyvinylalkohol und (b) einem formalisierten Vinylacetat/Ethylen-Copolymer besteht.

3. Verfahren zur Herstellung eines offenporigen Formkörpers auf Basis von Polyvinylacetalen durch Acetalisieren von Vinylpolymeren in einem sauren wäßrigen Medium in Gegenwart eines Netzmittels, dadurch gekennzeichnet, daß man

a) aus einem Gemisch aus einer wäßrigen Polyvinylalkohol (PVAL)-Lösung, die 10 bis 50 Gew.-% PVAL enthält, wobei der PVAL eine Esterzahl von 50 bis 270 mg KOH/g und die 4 gew.-%ige wäßrige Lösung des PVAL eine Viskosität von 4 bis 50 mPa·s (gemessen bei 20 °C nach DIN 53015) aufweist, und einer wäßrigen 40 bis 60 Gew.-% Feststoff enthaltenden Dispersion eines Vinylacetat/Ethylen-Copolymers, dessen Gehalt an Ethyleneinheiten 5 bis 60 Gew.-% beträgt, wobei die PVAL-Lösung und die Vinylacetat/Ethylen-Copolymer-Dispersion im Gewichtsverhältnis von 100 : 5 bis 100 : 150 eingesetzt werden, einen Schaum herstellt und

b) das Polymerengemisch in dem Schaum mit einem aliphatischen ($C_1$-$C_4$)-Mono- oder -Dialdehyd umsetzt.

4. Verfahren nach Anspruch 3, dadurch gekennzeichnet, daß man als aliphatischen Aldehyd Formaldehyd oder eine Formaldehyd abspaltende Verbindung verwendet.

5. Verfahren nach Anspruch 3, dadurch gekennzeichnet, daß man die Umsetzung bei einer Temperatur bis zu 100 °C durchführt.

### Claims

1. Open-pore molded article based on polyvinyl acetals prepared by acetalizing of vinyl polymers in an acid aqueous medium in the presence of a wetting agent by preparing a foam from a mixture of an aqueous polyvinyl alcohol (PVAL) solution, which contains from 10 to 50 per cent by weight of PVAL, the PVAL having an ester number of from 50 to 270 mg KOH/g and the 4 per cent by weight aqueous solution of the PVAL has a viscosity of from 4 to 50 mPa·s (measured at 20 °C according to DIN 53015), and an aqueous 40 to 60 per cent by weight of solids containing dispersion of a vinyl acetate/ethylene copolymer having an ethylene units content of from 5 to 60 per cent by weight, the PVAL solution and the vinyl acetate/ethylene copolymer dispersion being used in a weight proportion of from 100 : 5 to 100 : 150, and reacting said mixture of polymers with an aliphatic ($C_1$-$C_4$)-mono- or -dialdehyde, characterized in that the molded article is composed of a mixture of (a) an acetalized polyvinyl alcohol and (b) an acetalized vinyl acetate/ethylene copolymer.

2. Molded article according to claim 1, characterized in that it is composed of a mixture of (a) a formalized polyvinyl alcohol and (b) a formalized vinyl acetate/ethylene copolymer.

3. Process for the preparation of an open-pore molded article based on polyvinyl acetals by acetalizing vinyl polymers in an acid aqueous medium in the presence of a wetting agent, characterized in that

a) a foam is prepared from a mixture of an aqueous polyvinyl alcohol (PVAL) solution, which contains from 10 to 50 per cent by weight of PVAL, the PVAL having an ester number of from 50 to 270 mg KOH/g and the 4 per cent by weight aqueous solution of the PVAL has a viscosity of from 4 to 50 mPa · s (measured at 20 °C according to DIN 53 015), and an aqueous 40 to 60 per cent by weight of solids containing dispersion of a vinyl acetate/ethylene copolymer having an ethylene units content of from 5 to 60 per cent by weight, the PVAL solution and the vinyl acetate/ethylene copolymer dispersion being used in a weight proportion of from 100 : 5 to 100 : 150, and

b) the mixture of polymers in the foam is reacted with an aliphatic $(C_1-C_4)$-mono- or -dialdehyde.

4. Process according to claim 3, characterized in that the aliphatic aldehyde used is formaldehyde or a formaldehyde donor.

5. Process according to claim 3, characterized in that the reaction is carried out at a temperature of up to 100 °C.

**Revendications**

1. Objet moulé à alvéoles ouverts à base de poly-(vinyl-acétals), que l'on a préparé en acétalisant des polymères vinyliques dans un milieu aqueux acide, en présence d'un mouillant, plus précisément en produisant une mousse à partir d'un mélange constitué d'une solution aqueuse d'un poly-(alcool vinylique) (PVAL) contenant de 10 à 50 % en poids de PVAL, ce PVAL ayant un indice d'ester de 50 à 270 mg de KOH par gramme et ayant, lorsqu'il est sous la forme d'une solution aqueuse à 4 % en poids, une viscosité de 4 à 50 mPa · s (mesurée à 20 °C selon la norme DIN 53015), et d'une dispersion aqueuse, dont la teneur en matière solide est de 40 à 60 % en poids, d'un copolymère acétate de vinyle/éthylène dont la teneur en motifs d'éthylène est de 5 à 60 % en poids, la solution de PVAL et la dispersion du copolymère acétate de vinyle/éthylène étant mises en jeu en un rapport pondéral compris entre 100 : 5 et 100 : 150, et en faisant réagir le mélange de polymères mentionné avec un monoaldéhyde ou un dialdéhyde aliphatique en $C_1-C_4$, procédé caractérisé en ce que l'objet moulé est en un mélange constitué (a) de poly-(alcool vinylique) acétalisé et (b) d'un copolymère acétate de vinyle/éthylène acétalisé.

2. Objet moulé selon la revendication 1 caractérisé en ce qu'il est constitué d'un mélange (a) de poly-(alcool vinylique) formalisé et (b) d'un copolymère acétate de vinyle/éthylène formalisé.

3. Procédé de fabrication d'un objet moulé à alvéoles ouverts à base de poly-(vinyl-acétals), par acétalisation de polymères vinyliques dans un milieu aqueux acide, en présence d'un mouillant, procédé caractérisé en ce que

a) on produit une mousse à partir d'un mélange constitué d'une solution aqueuse de poly-(alcool vinylique) (PVAL) renfermant de 10 à 50 % en poids de PVAL, l'indice d'ester de ce PVAL étant compris entre 50 et 270 mg de KOH par gramme et une solution aqueuse à 4 % en poids de ce PVAL ayant une viscosité de 4 à 50 mPa · s (mesurée à 20 °C selon la norme DIN 53015), et d'une dispersion aqueuse, dont la teneur en matière solide est de 40 à 60 % en poids, d'un copolymère acétate de vinyle/éthylène dont la teneur en motifs d'éthylène est de 5 à 60 % en poids, la solution de PVAL et la dispersion du copolymère acétate de vinyle/éthylène étant mises en jeu dans un rapport pondéral comprise entre 100 : 5 et 100 : 150, et

b) on fait réagir le mélange de polymères, dans la mousse, avec un monoaldéhyde ou un dialdéhyde aliphatique contenant de 1 à 4 atomes de carbone.

4. Procédé selon la revendication 3 caractérisé en qu'on utilise, comme aldéhyde aliphatique, le formaldéhyde ou un composé libérant du formaldéhyde.

5. Procédé selon la revendication 3 caractérisé en ce qu'on effectue la réaction à une température d'au plus 100 °C.